# EUROPÄISCHE PATENTANMELDUNG

(11) **EP 0 910 211 A2**
(43) Veröffentlichungstag der Anmeldung: **21.04.1999**
(21) Anmeldenummer: 98119064.8
(22) Anmeldetag: 08.10.1998
(51) Int. Cl.: H04N 5/45

(54) **Fernsehgerät mit verbessertem Videotextzugriff mittels " Picture in Picture"-Tuner**

(30) Priorität: 14.10.1997 DE 19745288
(71) Anmelder: GRUNDIG Aktiengesellschaft, 90762 Fürth (DE)
(72) Erfinder: Eich, Manfred, Grundig AG, 90762 Fürth (DE)

(57) **Zusammenfassung**

Die Erfindung betrifft ein Fernsehgerät mit einer ersten Empfangseinrchtung (2) zum Empfang eines ersten Fernsehsignals für eine Darstellung auf einem Bildschirm (7) und mit einer zweiten Empfangseinrichtung (3) zum Empfang von Fernsehsignalen für eine Darstellung als Einblendung auf dem Bildschirm (7) (= Bild in Bild). Das Fernsehgerät weist außerdem einen Fernsehtextdecoder (12) auf, der an die zweite Empfangseinrichtung (3) angeschlossen ist und in einer Betriebsart 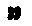 Videotext", d.h. wenn die zweite Empfangseinrichtung nicht für eine Bild in Bild Einblendung benötigt wird, laufend die Fernsehsignale mit Fernsehtext auswertet und die Informationen des Fernsehtextes in einem Speicher (8) abspeichert. Der Benutzer kann somit auch während der Aktivierung eines Fernsehprogrammes durch die ersten Empfangseinrichtung (2) ohne Zeitverlust Fernsehtexinformationen aus den im Speicher gespeicherten anderen Programmen abrufen, ohne daß er einen Programmwechsel durchführen muß.

## Beschreibung

Die Erfindung betrifft ein Fernsehgerät mit einer ersten Empfangseinrichtung zum Empfang eines ersten Fernsehsignals für eine Darstellung auf einem Bildschirm und mit mindestens einer zweiten Empfangseinrichtung zum Empfang von Fernsehsignalen für eine Darstellung als Einblendung auf dem Bildschirm und mit mindestens einem Decoder zur Decodierung von insbesondere zusammen mit den Fernsehsignalen übertragbaren Zusatzinformationen.

Die Erfindung betrifft weiter eine Zusatzeinrichtung, insbesondere einen Satellitenempfänger oder einen Videorecorder für ein Fernsehgerät mit mindestens einer Empfangseinrichtung zum Empfang von Fernsehsignalen und mit mindestens einem Decoder zur Decodierung von insbesondere zusammen mit den Fernsehsignalen übertragbaren Zusatzinformationen.

Bei einem derartigen Fernsehgerät handelt es sich beispielsweise um ein handelsübliches Fernsehgerät, das neben den zum Empfang und zur Betrachtung eines ersten Fernsehsignals erforderlichen ersten Empfangseinrichtung eine zweite Empfangseinrichtung, d.h. einen zweiten Tuner aufweist, der eine sogenannte Bild-in-Bild-Darstellung (Picture in Picture PIP) eines zweiten Fernsehprogramms ermöglicht. Bei der Zusatzeinrichtung handelt es sich beispielsweise um einen Videorecorder, der in der Regel ebenfalls über einen separaten Tuner verfügt und dessen Tuner auch für eine Bild-in-Bild-Darstellung auf einem mit dem Videorecorder gekoppelten Fernsehgerät zuläßt.

Der Erfindung liegt die Aufgabe zugrunde, den Benutzerkomfort bei der Aktivierung von zusammen mit den Fernsehsignalen übertragenen Zusatzinformationen zu erhöhen.

Diese Aufgabe wird bei einem Fernsehgerät der eingangs genannten Art dadurch gelöst, daß die zweite Empfangseinrichtung zum Empfang der zusammen mit den Fernsehsignalen übertragenen Zusatzinformationen vorgesehen ist und daß das Fernsehgerät einen Speicher aufweist, der zur, Speicherung der von der zweiten Empfangseinrichtung empfangenen Zusatzinformationen vorgesehen ist.

Diese Aufgabe wird bei einer Zusatzeinrichtung der eingangs genannten Art dadurch gelöst, daß die Empfangseinrichtung zum Empfang der zusammen mit den Fernsehsignalen übertragenen Zusatzinformationen vorgesehen ist und daß die Zusatzeinrichtung einen Speicher aufweist, der zur Speicherung der von der zweiten Empfangseinrichtung empfangenen Zusatzinformationen vorgesehen ist.

Der Erfindung liegt die Erkenntnis zugrunde, daß der Benutzerkomfort bei der Nutzung von Fernsehtext, beispielsweise Videotext-Informationen, häufig dadurch eingeschränkt ist, daß die Aktivierung der gewünschten Videotextseiten eine erhebliche Zeit in Anspruch nimmt. Zudem ist bei einem Programmwechsel wiederum eine erhöhte Zugriffszeit auf Fernsehtextdaten erforderlich. Gleichzeitig ist bei einem Fernsehgerät mit einer zweiten Empfangseinrichtung, d.h. mit einem zweiten Tuner, insbesondere für Bild-in-Bild-Darstellungen, der zweite Tuner meist nicht in Betrieb. Sofern die ohnehin vorhandene zweite Empfangseinrichtung für "Bild-in-Bild-Darstellungen" nicht benötigt wird, ist die zweite Empfangseinrichtung zum Empfang der zusammen mit den Fernsehsignalen übertragenen Zusatzinformationen vorgesehen. Hierzu wertet die zweite Empfangseinrichtung die empfangbaren Fernsehsignale mit Fernsehtext laufend aus und speichert die Informationen des Fernsehtextes in einen Speicher, der ohnehin vorhanden ist oder speziell für diesen Zweck im Fernsehgerät vorgesehen ist. Hierdurch kann der Benutzer auch während der Aktivierung eines bestimmten Fernsehprogramms durch die erste Empfangseinrichtung ohne Zeitverlust Fernsehtextinformationen aller im Speicher gespeicherten Programme abrufen, ohne daß ein Programmwechsel durchgeführt werden muß. Insgesamt ergibt sich hierdurch in der Betriebsart "Videotext" ein erheblich erhöhter Bedienungskomfort.

Die Benutzermöglichkeiten des mit einer zweiten Empfangseinrichtung, d.h. mit einem zweiten Tuner ausgestatteten Fernsehgeräts werden dahingehend erhöht, daß das Fernsehgerät Mittel zum Betrieb in zwei Betriebsarten aufweist, wobei in einer ersten Betriebsart die erste Empfangseinrichtung zum Empfang eines ersten Fernsehsignals für eine Darstellung auf einem Bildschirm und die zweite Empfangseinrichtung zum Empfang mindestens eines weiteren Fernsehsignals für eine Darstellung als Einblendung auf dem Bildschirm und wobei in einer zweiten Betriebsart die erste Empfangseinrichtung zum Empfang eines ersten Fernsehsignals für eine Darstellung auf einem Bildschirm und die zweite Empfangseinrichtung zum Empfang der zusammen mit den Fernsehsignalen übertragenen Zusatzinformationen vorgesehen sind.

Ein Abruf aller verfügbaren Fernsehtextdaten wird dadurch sichergestellt, daß die zweite Empfangseinrichtung an einen Fernsehtextdecoder angeschlossen ist und zur ständigen Auswertung aller empfangbarer Fernsehsignale mit Zusatzinformationen vorgesehen ist.

Die Möglichkeiten zur Nutzung des Fernsehtextangebots können dadurch wesentlich erhöht werden, daß das Fernsehgerät in einer Betriebsart 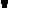 Fernsehtext" betreibbar ist, in der die Zusatzinformationen der empfangbaren Fernsehender abrufbar sind. In dieser Betriebsart stehen dann nicht lediglich die Fernsehtextinformationen des gerade aktivierten Fernsehsenders zur Verfügung, sondern es kann ohne jeglichen Zeitverlust in sämtlichen Fernsehtextseiten sämtlicher empfangbarer Fernsehsender 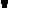 geblättert" werden.

Die Übersicht über die Vielzahl des Fernsehtextangebots kann dadurch sichergestellt werden, daß das Fernsehgerät einen OSD-Baustein aufweist, der zur Darstellung der Fernsehtextinformationen insbesondere geordnet nach den Programmplätzen und/oder Programmkennungen vorgesehen ist.

Im folgenden wird die Erfindung anhand der in den Figuren dargestellten Ausführungsbeispiele näher beschrieben und erläutert.

Es zeigen:
- Fig. 1: ein Ausführungsbeispiel eines Fernsehgeräts mit zweiter Empfangseinrichtung,
- Fig. 2: einen Bildschirmausschnitt mit Fernsehtextübersichtsdaten und
- Fig. 3: ein Ausführungsbeispiel für eine Zusatzeinrichtung mit integrierter Empfangseinrichtung.

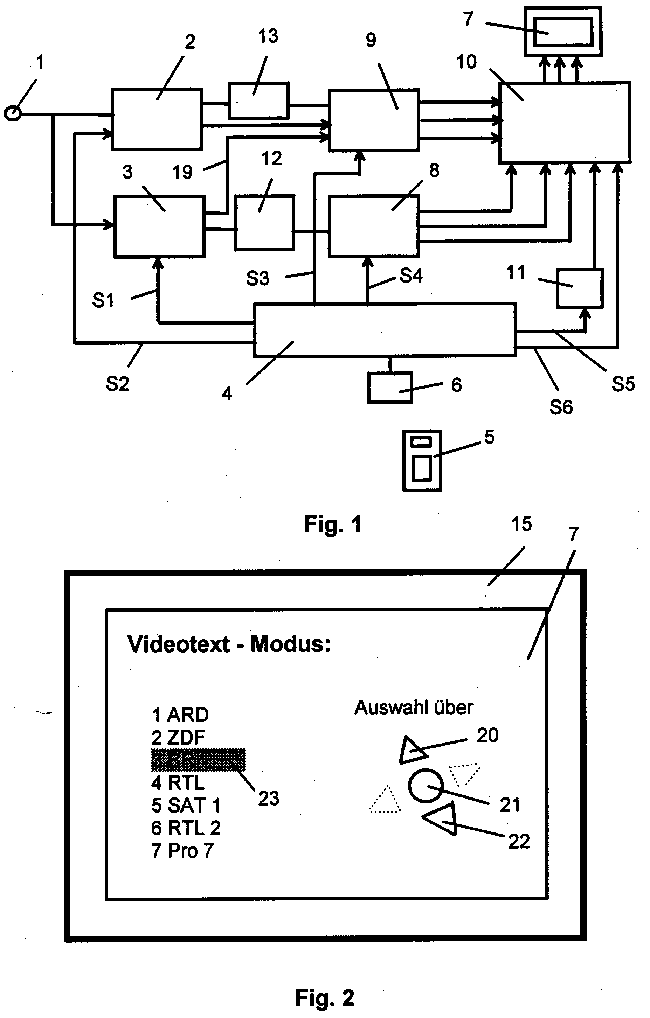

Fig. 1 zeigt ein Fernsehgerät mit einer ersten Empfangseinrichtung 2 und einer zweiten Empfangseinrichtung 3, die jeweils an einen Eingang 1 angeschlossen sind. Das Fernsehgerät weist darüberhinaus eine Signalverarbeitungseinrichtung 9, eine Eintastschaltung 10 sowie einen Bildschirm 7 auf. Die Signale der zweiten Empfangseinrichtung 3 werden über einen Videotextdecoder 12 an einen Speicher 8 weitergeleitet. Der Speicher 8 ist ebenfalls mit der Eintastschaltung 10 gekoppelt. Über eine Steuereinrichtung 4, beispielsweise einen Microcomputer, sind über ein erstes Steuersignal S1 der zweite Empfangsteil, über ein zweites Steuersignal S2 die erste Empfangseinrichtung, über ein drittes Steuersignal S3 die Signalverarbeitungsschaltung, über ein viertes Steuersignal S4 der Speicher 8, über ein fünftes Steuersignal S5 ein Display-on-Screen-Baustein 11 und über ein sechstes Steuersignal S6 die Eintastschaltung 10 steuerbar. Mit der Steuereinrichtung 4 ist darüberhinaus ein Fernbedienungsempfänger 6 verbunden, der Signale eines Fernbedienungsgebers 5 empfängt.

Die wesentlichen Grundfunktionen des in Fig. 1 dargestellten Fernsehgeräts entsprechen denen eines bekannten Fernsehgeräts, so daß auf diesbezügliche Erläuterungen verzichtet werden kann. Über den Eingang 1 des Fernsehgeräts werden Fernsehsignale von einer terrestrischen Antennenanlage, von einer Satellitenantennenanlage oder von einer Kabelanlage empfangen und an die Empfangseinrichtungen 2 und 3, die beispielsweise aus einem Tuner und einem ZF-Verstärker gebildet werden, weitergeleitet. Am Ausgang der ersten Empfangseinrichtung 2 liegt ein sogenanntes SBAS-Signal, das in der Signalverarbeitungsschaltung 9 in ein Komponentensignal, beispielsweise ein R-, G-, B-Signal umgewandelt wird. Das am Ausgang der Signalverarbeitungsschaltung 9 erhaltene R-, G-, B-Signal wird dann der Eintastschaltung 10 und von dort an den Bildschirm 7 zur Darstellung weitergeleitet. Zusätzlich zu dem mit Hilfe der ersten Empfangseinrichtung 2 empfangenen Fernsehprogramm kann der Benutzer des Fernsehgeräts durch Ansteuerung mittels der Fernbedienung 5 und eines entsprechenden Steuerbefehls S1 des Microprozessors 4 die zweite Empfangseinrichtung 3 derart ansteuern, daß über eine Signalleitung 19 eine sogenannte Bild-in-Bild-Darstellung eine Darstellung mindestens eines weiteren Fernsehsignals ermöglicht wird. Alternativ hierzu kann die zweite Empfangseinrichtung 3 mittels der Fernbedienung 5 und des Fernbedienungsgebers 6 bzw. der Steuereinrichtung 4 über das erste Steuersignal S1 in der Weise angesteuert werden, daß die zweite Empfangseinrichtung 3 fortlaufend sämtliche empfangbaren Fernsehprogramme absucht und die zusammen mit den Fernsehsignalen übertragenen Zusatzinformationen mit Hilfe des Fernsehtextdecoders 12 estrahiert und im Speicher 8 abspeichert. Der Benutzer kann somit beispielsweise bei Betrachtung eines Filmes, der im ersten Programm übertragen wird, durch entsprechende Aktivierung mittels der Fernbedienung 5, mittels des Fernbedienungsgebers 6, mittels der Steuereinrichtung 4 und des hieraus abgeleiteten vierten Steuersignals S4 die im Speicher 8 abgespeicherten Fernsehtextdaten aus anderen Fernsehprogrammen abrufen, ohne daß ein Zeitverlust oder ein Kanalwechsel erforderlich ist. So kann der Benutzer beispielsweise Wetterinformationen verschiedener Fernsehsender miteinander vergleichen und die für ihn gewünschten Informationen auswählen. Besonders vorteilhaft ist es, wenn das Fernsehgerät derart ausgestaltet ist, daß das Fernsehgerät in einer Betriebsart "Fernsehtext" betrieben werden kann, in der in Menueform auf dem Bildschirm eine Übersicht sämtlicher Programme erfolgt, die Videotextinformationen anbieten. Auf diese Weise kann sich der Benutzer menuegesteuert mit Hilfe der Fernbedienung die gewünschten Videotextinformationen extrahieren. Ebenso ist es möglich, daß der Benutzer entsprechend seinen Sehgewohnheiten ein eigenes Benutzerprofil mittels der Fernbedienung 5 und der Steuereinrichtung 4 vorab programmiert, in dem er bestimmte Vorzugsseiten, beispielsweise neueste Sportnachrichten, Wetterinformationen, Fluginformationen etc., speziell vorab als Vorzugsseiten programmiert. Ebenso ist eine Programmierung verschiedener Benutzerprofile für die unterschiedlichen Sehgewohnheiten innerhalb einer Familie bzw. innerhalb eines Nutzerkreises möglich.

Fig. 2 zeigt ein Ausführungsbeispiel eines möglichen Bildschirmmenues mit Fernsehtextdaten-Übersicht. Hierzu ist auf dem Bildschirm 7 des TV-Geräts 15 der Videotexmodus aktivierbar, der dann ein Einstiegsmenue anzeigt, welches die Programmnummer und die entsprechende Programmkennung von Programmen enthält, die jeweils Zusatzinformationen übertragen. Mittels der Fernbedienung 5 kann der Benutzer somit ohne tatsächlich durchzuführendem Programmwechsel die Videotextinformationen der verschiedenen Programme anwählen.

Die An- bzw. Auswahl des entsprechenden Videotext-Dienstes wird dadurch ermöglicht, daß der Benutzer den jeweils gewünschten Videotext-Dienst mittels auf der Fernbedienung und/oder dem Fernsehgerät selbst angeordneten sogenannten Cursor-Steuerungstasten 20, 21, 22 steuem kann. Durch eine entsprechende Anzeige der Bedienoberfläche in Form von Symbolen 20, 21, 22 auf dem Bildschirm 7 wird der Benutzer auf diese Möglichkeiten hingewiesen. Die Auswahl eines bestimmten Videotextdienstes kann somit folgendermaßen erfolgen: Der Benutzer wird durch entsprechende Hervorhebung 23 des aktuellen Standes, d.h. des Menuepunktes, über die momentane Cursorposition informiert. Bei dem in Fig. 2 dargestellten Ausführungsbeipiel befindet sich die aktuelle Position beim Programm 3 BR, was durch die farbliche Unterlegung angezeigt wird. Durch Betätigung der Taste 20 entsprechenden Taste auf der Fernbedienung bzw. am Fernsehgerät 15 selbst kann der Benutzer zum Programm 2 ZDF und bei nochmaliger Betätigung zum Menuepunkt 1 ARD gelangen. In entsprecheder Weise erfolgt eine Auswahl der zahlenmäßig aufsteigenden Menuepunkte durch Betätigung der der Anzeige 22 entsprechenden Taste. Die Auswahl des entsprechenden Videotextdienstes kann dann mittels der 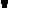 OK-Taste" 21 erfolgen. Insgesamt kann dieser Betriebsmodus völlig unabhängig vom gerade laufenden Fernsehprogramm erfolgen. Der Benutzer kann also beispielsweise gerade ein Programm, beispielsweise die Nachrichtensendung des Programms 1 ARD auf dem Bildschirm verfolgen und sich gleichzeitig Videotextinformationen aus einem anderen Programm ein- bzw. überblenden. Dies ist insbesondere dann von Vorteil, wenn der Benutzer beispielsweise an neuesten Meldungen interessiert ist, die in einem anderen als dem gerade gesehenen übertragen werden.

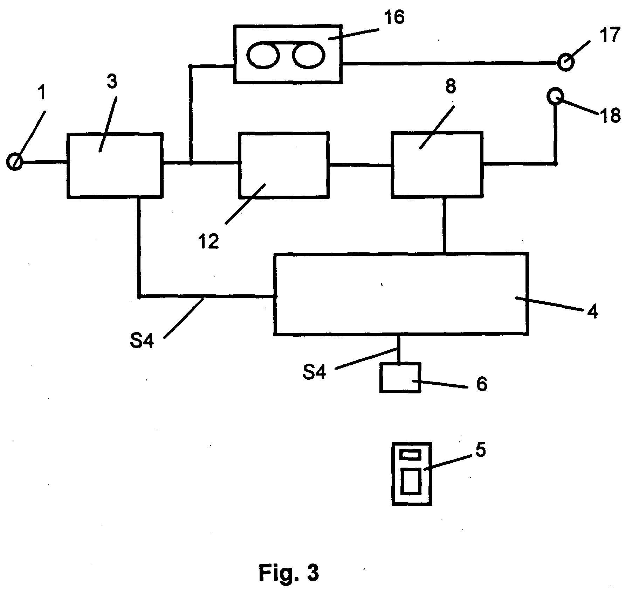

Fig. 3 zeigt ein Ausführungsbeispiel einer Zusatzeinrichtung mit integrierter Empfangseinrichtung 3. Bei einer derartigen Zusatzeinrichtung handelt es sich beispielsweise um ein separat an ein Fernsehgerät anzuschließende Zusatzeinrichtung, um einen Videorecorder, um eine Satellitenempfangsanlage oder ein sonstiges Empfangsgerät, das mit einem Fernsehgerät koppelbar ist. Die in Fig. 3 gezeigte Zusatzeinrichtung weist eine Empfangseinrichtung 3 auf, die an einem Eingang 1 anliegende Empfangssignale zugeführt werden. Darüberhinaus ist ein Videotextdatendecoder 12, ein Speicher 8 sowie eine Steuereinrichtung 4 vorgesehen. Bezüglich der Funktionsweise der Zusatzeinrichtung wird im wesentlichen auf die Beschreibung zu Fig. 1 verwiesen. Die Steuereinrichtung 4 dient der Abgabe von einem ersten Steuersignal S1 an die Empfangseinrichtung 3 sowie von einem Steuersignal S4 an den Speicher 8. Die Steuereinrichtung 4 ist mit einem Fernbedienungsgeber 6 verbunden, der Signale einer Fernbedienung 5 empfängt. Die Signale am Ausgang der Empfangseinrichtung 3 können wahlweise einem Aufzeichnungsmedium 16 oder dem Videotextdatendecoder 12 weitergeleitet werden. Sofern eine Aufnahmefunktion mittels der Aufzeichnungsvorrichtung 16 aktiviert ist, so ist die Empfangseinrichtung 3 auf einen vorprogrammierten Kanal, d.h. auf einen bestimmten Fernsehsender eingestellt. Im Falle, daß die Zusatzeinrichtung nicht für eine Aufnahme benötigt wird, ist es mit Hilfe der Empfangseinrichtung 3 möglich, daß diese laufend die über die über den Eingang 1 empfangenen Fernsehsignale mit Fernsehtext auswertet und die Informationen des Fernsehtextes in dem Speicher 8 abspeichert. Der Benutzer kann eine Aktivierung der gespeicherten Videotextdaten mit Hilfe der Fernbedienung 5 und mit Hilfe eines entsprechenden Steuersignals S4 auslösen, wodurch die entsprechenden Videotextdaten an einen Ausgang 18, der beispielsweise mit einem Fernsehgerät koppelbar ist, weitergeben werden. Sofern der Benutzer eine Wiedergabe von auf dem Aufzeichnungsmedium 16 enthaltenen Videoinformationen wünscht, ist über einen Anschluß 17 eine Ausgabe der aufgezeichneten Videoinformationen möglich.

Zusammenfassend betrifft die Erfindug somit ein Fernsehgerät mit einer ersten Empfangseinrchtung zum Empfang eines ersten Fernsehsignals für eine Darstellung auf einem Bildschirm und mit einer zweiten Empfangseinrichtung zum Empfang von Fernsehsignalen für eine Darstellung als Einblendung auf dem Bildschirm (= Bild in Bild). Das Fernsehgerät weist außerdem einen Fernsehtextdecoder auf, der an die zweite Empfangseinrichtung angeschlossen ist und in einer Betriebsart 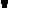 Videotext", d.h. wenn die zweite Empfangseinrichtung nicht für eine Bild in Bild Einblendung benötigt wird, laufend die Fernsehsignale mit Fernsehtext auswertet und die Informationen des Fernsehtextes in einem Speicher abspeichert. Der Benutzer kann somit auch während der Aktivierung eines Fernsehprogrammes durch die ersten Empfangseinrichtung ohne Zeitverlust Fernsehtexinformationen aus den im Speicher gespeicherten anderen Programmen abrufen, ohne daß er einen Programmwechsel durchführen muß.

## Patentansprüche

1. Fernsehgerät mit einer ersten Empfangseinrichtung (2) zum Empfang eines ersten Fernsehsignals für eine Darstellung auf einem Bildschirm (7) und mit mindestens einer zweiten Empfangseinrichtung (3) zum Empfang von Fernsehsignalen für eine Darstellung als Einblendung auf dem Bildschirm (7) und mit mindestens einem Decoder (12) zur Decodierung von insbesondere zusammen mit den Fernsehsignalen übertragbaren Zusatzinformationen,
**dadurch gekennzeichnet**,
daß die zweite Empfangseinrichtung (3) zum Empfang der zusammen mit den Fernsehsignalen übertragenen Zusatzinformationen vorgesehen ist und daß das Fernsehgerät einen Speicher (8) aufweist, der zur Speicherung der von der zweiten Empfangseinrichtung (3) empfangenen Zusatzinformationen vorgesehen ist.

2. Fernsehgerät nach Anspruch 1,
**dadurch gekennzeichnet,**
daß das Fernsehgerät Mittel zum Betrieb in zwei Betriebsarten aufweist, wobei in einer ersten Betriebsart die erste Empfangseinrichtung (2) zum Empfang eines ersten Fernsehsignals für eine Darstellung auf einem Bildschirm (7) und die zweite Empfangseinrichtung (3) zum Empfang mindestens eines weiteren Fernsehsignals für eine Darstellung als Einblendung auf dem Bildschirm (7) und wobei in einer zweiten Betriebsart die erste Empfangseinrichtung (2) zum Empfang eines ersten Fernsehsignals für eine Darstellung auf einem Bildschirm (7) und die zweite Empfangseinrichtung (3) zum Empfang der zusammen mit den Fernsehsignalen übertragenen Zusatzinformationen vorgesehen sind.

3. Fernsehgerät nach einem der Ansprüche 1 oder 2,
**dadurch gekennzeichnet**,
daß die zweite Empfangseinrichtung (3) an einen Fernsehtextdecoder (12) angeschlossen ist und zur ständigen Auswertung aller empfangbarer Fernsehsignale mit Zusatzinformationen vorgesehen ist.

4. Fernsehgerät nach einem der Ansprüche 1 bis 3,
**dadurch gekennzeichnet**,
daß das Fernsehgerät in einer Betriebsart 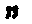 Fernsehtext" betreibbar ist, in der die Zusatzinformationen der empfangbaren Fernsehender abrufbar sind.

5. Fernsehgerät nach einem der Ansprüche 1 bis 4,
**dadurch gekennzeichnet**,
daß das Fernsehgerät einen OSD-Baustein (11) aufweist, der zur Darstellung der Fernsehtextinformationen insbesondere geordnet nach den Programmplätzen und/oder Programmkennungen vorgesehen ist.

6. Zusatzeinrichtung, insbesondere Satellitenempfänger, Videorecorder für ein Fernsehgerät mit mindestens einer Empfangseinrichtung (3) zum Empfang von Fernsehsignalen und mit mindestens einem Decoder (12) zur Decodierung von insbesondere zusammen mit den Fernsehsignalen übertragbaren Zusatzinformationen,
**dadurch gekennzeichnet**,
daß die Empfangseinrichtung (3) zum Empfang der zusammen mit den Fernsehsignalen übertragenen Zusatzinformationen vorgesehen ist und daß die Zusatzeinrichtung einen Speicher (8) aufweist, der zur Speicherung der von der zweiten Empfangseinrichtung (3) empfangenen Zusatzinformationen vorgesehen ist.

7. Zusatzeinrichtung nach Anspruch 6,
**dadurch gekennzeichnet**,
daß die Zusatzeinrichtung Mittel zum Betrieb in zwei Betriebsarten aufweist, wobei in einer ersten Betriebsart die Empfangseinrichtung (3) zum Empfang mindestens eines weiteren Fernsehsignals für eine Darstellung als Einblendung auf dem Bildschirm (7) und in einer zweiten Betriebsart zum Empfang der zusammen mit den Fernsehsignalen übertragenen Zusatsinformationen vorgesehen sind.

8. Zusatzeinrichtung nach einem der Ansprüche 6 oder 7,
**dadurch gekennzeichnet,**
daß die Empfängseinrichtung (3) an einen Fernsehtextdecoder (12) angeschlossen ist und zur ständigen Auswertung aller empfangbarer Fernsehsignale mit Zusatzinformationen vorgesehen ist.

9. Zusatzeinrichtung nach einem der Ansprüche 6 bis 8,
**dadurch gekennzeichnet**,
daß die Zusatzeinrichtung in einer Betriebsart 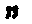 Fernsehtext" betreibbar ist, in der die Zusatzinformationen der empfangbaren Fernsehender abrufbar sind.

10. Zusatzeinrichtung nach einem der Ansprüche 6 bis 9,
**dadurch gekennzeichnet**,
daß das Fernsehgerät einen OSD-Baustein (11) aufweist, der zur Darstellung der Fernsehtextinformationen insbesondere geordnet nach den Programmplätzen und/oder Programmkennungen vorgesehen ist.
